Europäisches Patentamt

European Patent Office

Office européen des brevets

(11) Publication number: **0 388 966**
**A2**

# EUROPEAN PATENT APPLICATION

(21) Application number: **90105453.6**

(51) Int. Cl.5: **C04B 35/04**

(22) Date of filing: **22.03.90**

(30) Priority: **22.03.89 US 327061**

(43) Date of publication of application:
**26.09.90 Bulletin 90/39**

(84) Designated Contracting States:
**DE SE**

(71) Applicant: **NORTON COMPANY**
**1 New Bond Street**
**Worcester, MA 01615-0008(US)**

(72) Inventor: **Butkus, Anthony K.**
**15 Barclay St.**
**Worcester, MA 01602(US)**
Inventor: **Martin, Scott D.**
**80 Holden Road**
**Paxton, MA(US)**

(74) Representative: **Diehl, Hermann Dr. et al**
**Diehl & Glaeser, Hiltl & Partner**
**Flüggenstrasse 13**
**D-8000 München 19(DE)**

(54) **Refractory body, method of making and use of same.**

(57) A refractory body for use in a corrosive environment, the body being formed by combining fused chromia-magnesia grain in a substantially pure chrome oxide bond matrix. The chromia-magnesia is present in a total amount of about 70wt.% and the chrome oxide is present in a total amount of around 30wt.%. The chromia-magnesia is initially provided in a plurality of selected size grades, in order to allow very dense interstitial packing and, thereby, a very high density (greater than or equal to 84% of theoretical density) of chromia-magnesia in the body, and a very low porosity (i.e., 99% of pores less than 100 $\mu$m diameter and mean pore diameter less than 0.5 $\mu$m).

EP 0 388 966 A2

## REFRACTORY BODY, METHOD OF MAKING AND USE OF SAME

DEFINITION:

The "F" which appears in the specification means that the indicated particle size (mesh size) of the material includes particles of the numerical mesh size indicated plus an indeterminate amount of finer particles. It's a common designation.

For example 10F would means that the major amount of the material would be 10 mesh, i.e. particles that would pass through a 10 mesh screen (sieve) but not through a 12 mesh screen, but would also include some finer material that would pass through the 10 and 12 mesh screens.

It has been common practice to use refractory materials in high temperature environments, since they generally maintain their physical strength when heated and because they have high heat-retention characteristics. In most process environments, they are not subject to unacceptable levels of corrosion from chemicals generated by the process. However, a special situation exists where coal or coke are being burned and slag is generated. Another such situation exists in the use of refractory as a lining of a glass furnace where siliceous compounds are present. These generated materials, such as slag or siliceous compounds, are capable of infiltrating and corroding most refractory bodies. One of the refractories developed for use in such an environment involves co-fused chromia alumina, as described in the patent of FRASER No. 4,544,643. Another patent to MORTL No. 4,366,256 describes the use of magnesium chromite bonded with magnesium oxide as a refractory. Refractories of this type have shortcomings, particularly, because they are attacked by siliceous materials. Similarly, the patent of HARTLINE No. 4,435,514 teaches the use of co-fused chromia-magnesia grains bonded by in-situ-formed chromia-magnesia bond, while the patent of WASHBURN No. 4,483,932 describes the use of magnesium chromite grains and chromia and magnesia bond to protect a thermocouple in a coal slag environment. Such refractories of the prior art suffer from deterioration when contacted by siliceous materials due to leaching or chemical reaction. These and other difficulties experienced with prior art refractories have been obviated in a novel manner by the present invention.

It is, therefore, an outstanding object of the invention to provide a refractory body that will not seriously deteriorate in the presence of molten siliceous materials. In order to solve this object, the invention provides the refractory body of claim 1. Further advantageous features of the refractory body are evident from the dependent claims.

The invention also provides a method for making such a refractory body according to claim 15 and the use of same in a corrosive environment where siliceous compounds are present.

The invention provides a refractory body that can be used in high temperature furnaces where silica is present.

The invention also provides a refractory body which is simple in nature, which is inexpensive to manufacture, and which has a long life of useful service.

In general, the invention consists of a refractory body for use in an environment where molten siliceous materials and other materials corrosive to conventional refractories are present. The body is comprised of densely packed grains of fused chromia-magnesia. This dense packing is achieved by using a preferred range of grain sizes from 5.66 mm (3.5 mesh) to 177μm (80 mesh) and by using a prepared distribution of particle sizes across the range. An upper limit of at least 590 μm (30 mesh) is required for proper distribution. This distribution is derived by computer modeling based on information presented at the Fine Particle Society, April 12-14, 1982, by Dr. Dinger, Funk and Funk of Alfred University. Wherein, a useful equation has been developed from and related to two of the major particle packing theories.

This equation is known as the Alfred Distribution and is stated as:

$$\frac{CPFT}{100} = \frac{D^n - Ds^n}{DL^n - Ds^n}$$

where
CPFT = cumulative percent finer than
Ds = smallest particle size in the distribution
DL = largest particle size in the distribution
D = any particle size in the distribution between

Ds and DL

n = distribution modulus in Andreasson and Alfred theories

where computer modeling determined that optimum packing of continuous Alfred distributions of particles occurs when the distribution modulus, n is 0.37. For best particle packing, as employed in this invention, chromia-magnesium grains exhibiting distribution modulii between 0.5 and 0.33 were utilized.

This in effect, created a chromia-magnesia body that is densely packed via particle packing so that 78% or better of theoretical density is achieved and porosity that results is less than 16%. The pores are uniformly small, in the range of 100 to 0.4 $\mu$m, with the preferred pore diameter being an average of 2.5 $\mu$m.

The bonding media, which is initially finer than 44 $\mu$m (325 mesh), is comprised of chromic oxide which has an average particle size of 3 $\mu$m. This fine chromic oxide sinters to form a bond that is resistant to attack by siliceous environments. Prior art refractory bodies have bonds formed from fine chromia-magnesia, sometimes formed in situ, i.. Hartline patent No. 4,435,514. Magnesia has a chemical affinity for silicas, aluminas and calcias at elevated temperatures. The resulting leaching of magnesia from the fine chromia-magnesia grain during exposure to such hot corrosives weakens the bond. By providing a fine chromic oxide bond, one does not provide magnesia for bond deterioration.

This refractory body of the present invention can be formed by hydraulic pressing. In a novel approach, which lends itself to lower manufacturing costs, the body can be vibrocast into a mold. The mold may be of the type which absorbs or of the type which does not absorb water.

The body is typically formed of a distribution of particle sizes of co-fused chromia-magnesia from about 5.66 mm (3.5 mesh) to about 177 $\mu$m (80 mesh) (US Standard Sieve Series) to achieve a high density of the chromia-magnesia (about 3.88 grams/cc) after cold pressing (or vibrocasting) and firing. Preferably, the body is formed from about 18-23% (wt.) chromia-magnesia in a grain size that will pass 5.66 mm (3.5 mesh) and not pass 3.36 mm (6 mesh); about 25-30% chromia-magnesia in a grain size that will pass 3.36 mm (6 mesh) but not pass 350 $\mu$m (45 mesh); about 12-17% of chromia-magnesia that will pass 350 $\mu$m (45 mesh) but not pass 177 $\mu$m (80 mesh); and chrome oxide is present in an amount equal to about 29%.

In a first preferred embodiment of the invention, the composition is cold pressed and then fired; the formulation is as follows:

| Element | Weight Percent | |
|---|---|---|
| Chromia-Magnesia (-3.5 + 6)* | | 23 |
| Chromia-Magnesia (-6 + 45) ** | 30 | |
| Chromia-Magnesia (-45 + 80)*** | | 17 |
| Alumina | | 1 |
| Chromium Oxide (J5310) | 29 | |
| Swift's colloid (animal glue) | | 4 |

\* up to 5.66 mm and greater than 3.36 mm

\*\* up to 3.36 mm and greater than 350 $\mu$m

\*\*\* up to 350 $\mu$m and greater than 177 $\mu$m

The alumina is the grade Al5SG produced by the Aluminum Company of America and is rated as "super ground".

The Chromium-Oxide (J5310) is extremely fine dust (less than 18 $\mu$m (800 mesh).

The properties of the refractory body thus formed proved to be as follows:

| English Units: | | | | |
|---|---|---|---|---|
| Density lbs./cu.ft. | MOE (psi) | RT MOR (psi) | 2642°F MOR (psi) | Cold Crushing Strength(psi) |
| 242.2 | 13x10$^6$ | 2,900 | 2,407 | 12,000 |
| Metric Units: | | | | |
| Density g/cc. | MOE (GPa) | RT MOR (MPa) | 1450°F MOR (MPa) | Cold Crushing Strength(MPa) |
| 3.88 (3.85) | 90 (60) | 20 (9) | 16.6 | 82.7 (40) |

In the above chart MOE stands for "modulus of elasticity" and RT MOR stands for "room temperature modulus of rupture". The cold crushing strength is similar to the compressive strength. The numbers in parentheses show comparative values for a conventional commercially available refractory sold under the brand RADEX and consisting of chromia-magnesia particles in a chromia-magnesia binder.

A modified form of the invention lends itself to forming by vibrocasting where a difficult shape is involved. The vibrocast formulation is as follows:

| Element | Weight Percent |
|---|---|
| Chromia-Magnesia (-3.5 + 6) * | 18.00 |
| Chromia-Magnesia (-6 + 45) ** | 25.00 |
| Chromia-Magnesia (-45 + 80) *** | 12.00 |
| Chromia-Magnesia (-80) **** | 15.00 |
| Chromium-oxide (J5310) | 30.00 |
| Darvan 811-D (defloculent) | 00.15 |
| Water | 4.30 |

* up to 5.66 mm and greater than 3.36 mm
** up to 3.36 mm and greater than 350 μm
*** up to 350 μm and greater than 177 μm
**** up to 177 μm

The pH of the mixture is adjusted to 10-11 before vibrocasting. The Chromium-oxide (J5310) is extremely fine dust (less than 18 μm (800 mesh)). The Darvan-brand defloculent is a sodium "acrylate copolymer" sold by R.T. Vanderbilt Company, Inc. The mixture described above is ideally suited to the formation of intricate refractory bodies by vibrocasting, since it forms a thixatropic mixture that flows freely under vibration.

A hydraulically pressed sample of the first, preferred embodiment of the refractory body of the present invention was subjected to a 6 hour drip slag test at 1559° C using an artificial western type slag. The results were a silica penetration to a depth of 4.76 mm (3/16 inches) and no surface erosion. The reason for no surface erosion is that the chromic oxide bond is relatively chemically inert and therefore does not combine with the slag constituencies.

For comparison, a refractory body comprised of 70% wt. of the total particles of fused alumina (in sizes: 50% of 10F; 10% of 90F; and 10% of 325F) in a binder that is 20% wt. of the total fine alumina (size A17SG) and 10% wt. of the total fine chromia was subjected to a drip slag test of the same slag at 1550° C for 6 hours caused a surface erosion 25.4 mm (1 inch) wide by 108 mm (4-1/4 inches) long and a depth of 1.6 mm (1/16 inch). Silica penetration from the eroded surface penetrated an additional 7.9 mm (5/16 inch).

By starting the formation of the bodies of refractory with a relatively uniform distribution of co-fused chromia-magnesia particles from about 5.66 mm to about 177 μm (about 3.5 to about 80 mesh), high density packing can be achieved. The final product has a density of 3.7 to 4.2 gm/cc. Thus, the void spaces are very small and minimal. The final product is greater than or equal to 84% of theo. density, with about 13% open pores and about 3% closed pores. More specifically, the average pore diameter must be 9 μm

4

or less, and no more than 10% by volume of the total of the pores may have a diameter of more than 20 $\mu$m For example, in the preferred embodiment, the mean pore diameter is 5.0 $\mu$m and the upper bound diameter of 100% $\mu$m.

It has been found that the formation of the refractory body from the relatively uniform distribution of grain sizes of chromia-magnesia results in a body having very small pores. The small size of the pores appears to limit the ability of corrosive environmental compounds to enter the body and cause degradation. In certain situations that is sufficient to protect the body.

However, it has been found that, in many situations, the corrosive compounds still bring about break-up of bodies employing conventional chromia-magnesia grains bound by a binder formed of chromia and magnesia.

It has been found that very substantial increases in corrosion resistance (retention of physical strength and break-up resistance) can be achieved by minimizing the chromia-magnesia grains that are very fine (less than 149 $\mu$m (100 mesh)) and employing substantial entirely extremely fine (less than 37 $\mu$m (400 mesh) and preferably less than 18 $\mu$m (800 mesh)) chromia as the bond material.

Extremely fine chromia is sufficiently reactive that it can function as a binder by itself (without co-binders such as magnesia). This pure-chromia bond is relatively corrosion resistant this added corrosion resistance at the bond significantly increases the overall corrosion resistance of the body itself.

Finally, the intentional avoidance of chromia-magnesia grains finer than about 149 $\mu$m (100 mesh) adds additional corrosion resistance to the body. This large gap between the minimum size of the chromia-magnesia grains and the size of the chromia binder has two beneficial effects. First, the reduced corrosion resistance of chromia-magnesia grains below 149 $\mu$m (100 mesh) causes their presence in the structure of the body to reduce the corrosion resistance of the body. Thus their presence should be avoided. Second, the reactivity of chrome-magnesia grains above 149 $\mu$m (100 mesh) is sufficiently low, relative to the extremely fine chromia, that the chrome-magnesia grains are passive elements of the bonding process. Thus the relatively pure-chromia aspect of the bonding and the corrosion resistance of the bond and resulting body are preserved.

While it will be apparent that the illustrated embodiments of the invention herein disclosed are calculated adequately to fulfill the objects and advantages primarily stated, it is to be understood that the invention is susceptible to variation, modification, and change within the spirit and scope of the subjoined claims.

The invention having been thus described, what is claimed as new and desired to secure by Letters Patent is:

## Claims

1. A refractory body, said body being formed from fused chromia-magnesia particles and a chromia binder.

2. A refractory body as recited in claim 1, wherein the chromia binder is substantially pure.

3. The refractory body as recited in claim 1 or 2, wherein a substantial portion of the initial chromia is finer than 18 $\mu$m (800 mesh).

4. The refractory body as recited in one of the preceding claims, wherein the initial chromia-magnesia is substantially free of particles finer than 149 $\mu$m (100 mesh).

5. The refractory body as recited in one of the preceding claims, wherein the particles have an initial distribution modulus of 0.5 to 0.33.

6. The refractory body of one of the preceding claims, said body being formed from a relatively distribution of fused chromia-magnesia particles from about 5.66 mm to about 177 $\mu$m (about 3.5 mesh to about 80 mesh), preferably at least 590 $\mu$m to about 177 $\mu$m (at least 30 mesh to about 80 mesh) and having a distribution modulus of 0.5 to 0.33, and a chromia binder of less than 74 $\mu$m (200 mesh), and said body having a density of 78% or greater of theoretical density, an average pore diameter of nine $\mu$m or less, and no more than 1% of the total of the pores having a diameter of more than 100 $\mu$m.

7. The refractory body of one of the preceding claims obtainable by firing an initial mixture comprising

(a) about 18-23% chromia-magnesia in a grain size that will pass 5.66 mm (3.5 mesh) and not pass 3.36 mm (6 mesh),

(b) about 25-30% chromia magnesia in a grain size that will pass 3.36 mm (6 mesh) but not pass 350 $\mu$m (45 mesh),

(c) about 12-17% of chromia-magnesia that will pass 350 $\mu$m (45 mesh) but not pass 177 $\mu$m (80 mesh), and

5

(d) fine chromia.

8. The refractory body as recited in claim 7, wherein alumina is present in an amount equal to about 1%.

9. The refractory body as recited in claim 7 or 8, wherein chrome oxide is present in an amount from about 20 wt.% to about 40 wt.%, preferably in an amount equal to about 30%.

10. The refractory body as recited in one of claims 7 to 9, wherein Swift's colloid is initially present in an amount equal to about 4%.

11. The refractory body as recited in one of claims 7 to 10, wherein chromia-magnesia is present in an amount equal to about 15% in a grain size that will pass on 177 μm (80 mesh).

12. The refractory body as recited in one of claims 7 to 11, wherein a defloculent is initially present in an amount equal to about 0.15% and water is initially present in an amount equal to about 4% with pH adjusted to about 10-11.

13. The refractory body as recited in claim 8 for use in an environment where siliceous compounds are present, comprising,

(a) about 23% of chromia-magnesia in the grain size up to 5.66 mm and greater than 3.36 mm (-3.5 + 6),

(b) about 30% of chromia-magnesia in the grain size up to 3.36 mm and greater than 350 μm (-6 + 45),

(c) about 17% of chromia-magnesia in the grain size up to 350 μm and greater than 177 μm (-45 + 80),

(d) about 29% of chromium oxide, and

(e) about 1% alumina.

14. The refractory body as recited in claim 9 for use in an environment where siliceous compounds are present, comprising,

(a) about 18% of chromia-magnesia in the grain size up to 5.66 mm and greater than 3.36 mm (-3.5 + 6),

(b) about 25% of chromia-magnesia in the grain size upt to 3.36 mm and greater than 350 μm (-6 + 45),

(c) about 12% of chromia-magnesia in the grain size up to 350 μm and greater than 177 μm (-45 + 80),

(d) about 15% of chromia-magnesia in the grain size up to 177 μm (-80), and

(e) about 30% of chromium oxide.

15. A method of forming a refractory body as recited in one of the preceding claims, comprising the steps of:

(a) preparing an initial mixture of chromia-magnesia particles and a substantially pure chromia binder,

(b) firing the mixture to cause the binder to bind the particles together.

16. Use of the refractory body of one of the preceding claims for a corrosive environment where siliceous compounds are present.